Europäisches Patentamt

European Patent Office

Office européen des brevets

(19)

(11) EP 0 851 407 A2

(12) **EUROPEAN PATENT APPLICATION**

(43) Date of publication:
01.07.1998 Bulletin 1998/27

(51) Int Cl.6: **G10L 9/14**, **H04B 14/04**

(21) Application number: 97122701.2

(22) Date of filing: 22.12.1997

(84) Designated Contracting States:
**AT BE CH DE DK ES FI FR GB GR IE IT LI LU MC NL PT SE**
Designated Extension States:
**AL LT LV MK RO SI**

(30) Priority: 24.12.1996 KR 9671319

(71) Applicant: **LG ELECTRONICS INC.**
**Seoul (KR)**

(72) Inventor: **Park, Tae-Hong**
**Seoul (KR)**

(74) Representative:
**TER MEER STEINMEISTER & PARTNER GbR**
**Mauerkircherstrasse 45**
**81679 München (DE)**

(54) **Method for restoring speech data in speech codec**

(57)     Method for restoring a speech data in a speech codec, is disclosed, in which optimal speech samples can be selected from a received speech samples by placing speech samples each having an average of adjacent speech samples in empty spaces between speech samples for restoring an original speech sample data from quantized sampling data, in the method, the following process is carried out repeatedly, including the steps of calculating an average speech sample of adjacent speech samples for 13 speech samples, placing the average speech sample in empty spaces of the 13 speech samples, and filling remaining spaces after the placement of the average speech samples with average speech samples placed in nearest spaces.

## FIG.2A

**Description**

BACKGROUND OF THE INVENTION

Field of the Invention

The present invention relates to a method for restoring a speech data in a speech codec.

Discussion of the Related Art

In general, in a speech transmission in the GSM(Global System Mobile) system, an analog speech signal of 4 kHz is converted into a digital signal of 64 kbps and converted again into a low speed of 13 kbps before modulation. For making such a digital speech transmission, a RPE (Regular Pulse Excited) algorithm which generates impulse noise for imitating natural characteristics of a speech and a linear predicting coding algorithm which composes a speech waveform using a filter having 8 transmission coefficients for a speech frame for 20 ms are used on the same time.

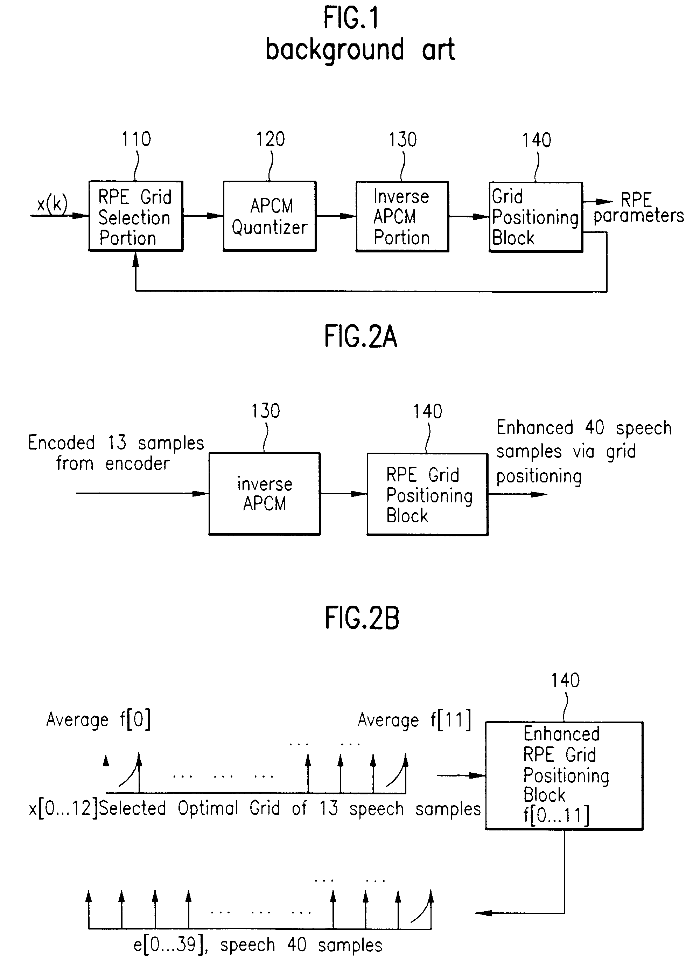

Referring to Fig. 1, in general, the speech codec is provided with a RPE grid selection portion 110 for receiving 40 speech sample x(k) and selecting 13 optimal speech sample, an APCM (Adaptive Pulse Code Modulation) quantizer 120 for receiving the 13 speech sample from the RPE grid selection portion and quantizing according to a look up table, an inverse APCM portion 130 for decoding data from the APCM quantizer 120 into the 13 speech sample, and a grid positioning block 140 for receiving the 13 speech sample restored in the inverse APCM portion 130 and restoring into an original 40 speech sample and feeding back to the RPE grid selection portion 110.

The operation of the aforementioned general speech codec will be explained.

RPE-LTP(Regular Pulse Excited Long Term Predictor) algorithm, generally used in the speed codec, determines short term residual signals by using a linear predictive coding analysis and a short term analysis filter and removes the residual signals by means of gains and lags calculated from pitches of grids in a long term signal prediction. First, upon reception of 40 speech samples divided in subframe units from 160 speech samples, the RPE grid selection portion 110 decimates speech sample data, selects 13 speech samples by an RPE mean squared criterion, and provides to the APCM quantizer 120. And, the APCM quantizer 120 quantizes the 13 speech samples using the look up table and provides the quantized speech data to a decoder block. In this instance, the inverse APCM portion 130 decodes the approximated 13 speech data from the APCM quantizer 120 using the look up table. The grid positioning block 140 makes up-sampling of the 13 samples decoded in the inverse APCM portion 130 to restore the original 40 speech samples, filling '0's between empty spaces of the 13 speech samples. The 40 speech samples restored in the grid positioning block 140 is processed and fed back to the RPE grid selection portion 110 so that the RPE grid selection portion 110 selects 13 optimal speech sample from the next received 40 speech samples by mean squared criterion.

However, the background art has a problem in that speech samples of optimal characteristics can not be extracted because many speech data are lost due to the restoration of the 13 speech samples to the original 40 speech samples by filling '0's between empty spaces of the 13 speech samples in the grid positioning block 140 and feeding back to the grid selection portion 110.

SUMMARY OF THE INVENTION

Accordingly, the present invention is directed to a method for restoring a speech data in a speech codec that substantially obviates one or more of the problems due to limitations and disadvantages of the related art.

Additional features and advantages of the invention will be set forth in the description which follows, and in part will be apparent from the description, or may be learned by practice of the invention. The objectives and other advantages of the invention will be realized and attained by the structure particularly pointed out in the written description and claims hereof as well as the appended drawings.

To achieve these and other advantages and in accordance with the purpose of the present invention, as embodied and broadly described, in the method for restoring a speech data in a speech codec, the following process is carried out repeatedly, including the steps of calculating an average speech sample of adjacent speech samples for 13 speech samples, placing the average speech sample in empty spaces of the 13 speech samples, and filling remaining spaces after the placement of the average speech samples with average speech samples placed in nearest spaces.

It is to be understood that both the foregoing general description and the following detailed description are exemplary and explanatory and are intended to provide further explanation of the invention as claimed.

BRIEF DESCRIPTION OF THE DRAWINGS

The accompanying drawings, which are included to provide a further understanding of the invention and are in-

EP 0 851 407 A2

corporated in and constitute a part of this specification, illustrate embodiments of the invention and together with the description serve to explain the principles of the invention:

In the drawings:

Fig. 1 illustrates a block diagram showing a general speech codec;

Fig. 2A illustrates a block diagram showing a speech codec in accordance with a preferred embodiment of the present invention;

Fig. 2B illustrates an exemplary operation ofthe RPE grid positioning block shown in Fig. 2B;

Figs. 3A to 3C illustrate the steps of a RPE grid positioning process of the present invention; and,

Figs. 4A to 4D illustrate exemplary upsampled candidates.

DETAILED DESCRIPTION OF THE PREFERRED EMBODIMENT

Reference will now be made in detail to the preferred embodiments of the present invention, examples of which are illustrated in the accompanying drawings. Fig. 2A illustrates a block diagram showing a speech codec in accordance with a preferred embodiment of the present invention, and Fig. 2B illustrates an exemplary operation of the RPE grid positioning block shown in Fig. 2B.

Referring to Fig. 2A and 2B, identical to the block diagram shown in Fig. 1, the speech codec in accordance with a preferred embodiment of the present invention includes a RPE grid selection portion 110, an APCM quantizer 120, an inverse APCM portion 130, and a RPE grid positioning block 140. The RPE grid positioning block 140 decimates the 13 speech samples from the inverse APCM portion 130 to obtain averages of adjacent speech samples and places the averages in empty spaces between the 13 speech samples to restore 40 speech samples.

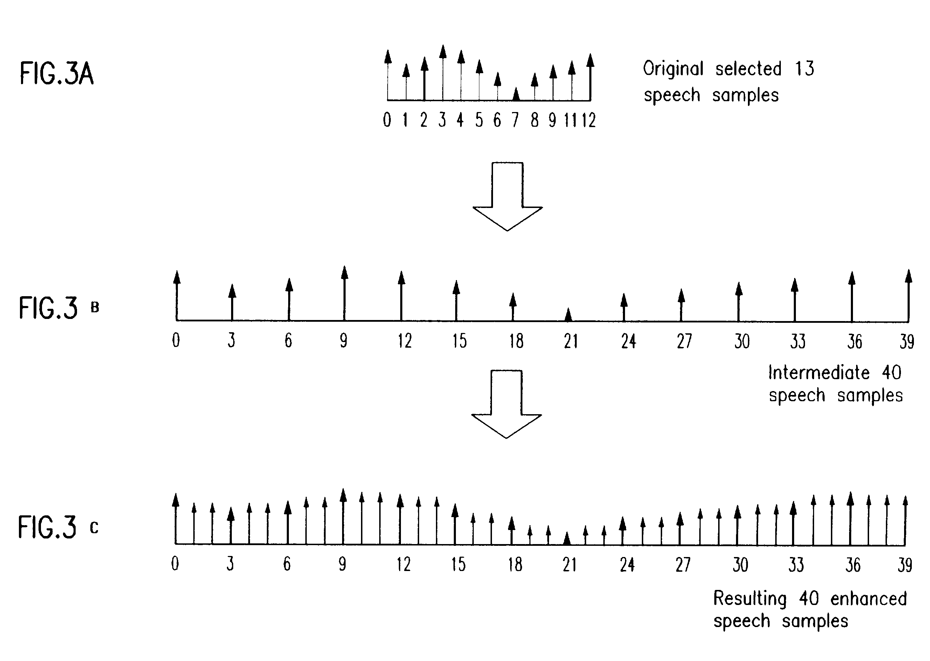

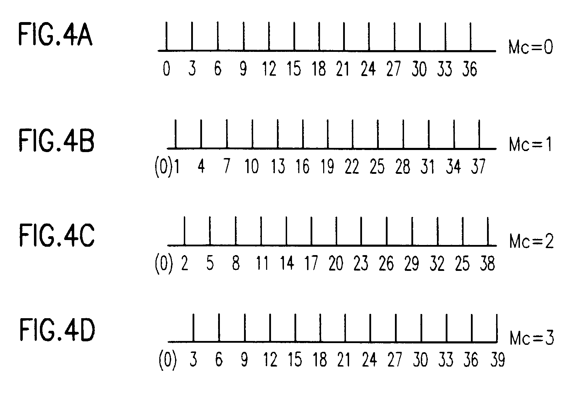

Figs. 3A to 3C illustrate the steps of a RPE grid decoding process of the present invention, and Figs. 4A to 4D illustrate exemplary upsampled candidates. The operation and advantages of one preferred embodiment of the present invention will be explained in detail.

In the present invention, alike the background art, 160 speech samples are divided into subframes each with 40 speech samples, and optimal 13 speech samples selected from the 40 speech samples in each subframe through the RPE grid selection portion 110, the APCM quantizer 120 are provided to a decoder as an approximated speech data and decoded into 13 speech samples in the inverse APCM portion 130(see Fig. 3A). Then, the RPE grid positioning block 140 makes up-sampling ofthe 13 speech samples to restore into the 40 speech samples and feed back to the RPE grid selection portion 110, thereby selecting 13 optimal speech samples from the next received 40 speech samples (see Fig. 3B). Herein, a grid when an optimal candidate is selected is given a reference number Mc, there are 13 speech samples in each of the grids Mc[0--2]. The grid positioning block 140 calculates averages between adjacent ones of the 13 optimal speech samples and places in empty spaces between the 13 speech samples, thereby the 40 speech samples can be restored(see Fig. 3C).

Such a process can be divided into the following four steps.

For the first step, an average f(k) between adjacent speech samples of the 13 speech samples can be obtained by the following equation.

$$f(k) = x(Mc+3*k)*0.5+x(Mc+3*(k+1))*0.5 , k = 0 \text{ --- } 11$$

For example, when the grid number Mc is '0', the average f(0) for '0'th and '3'th samples is obtained as follows.

$$f(0) = x(0+0)*0.5+x(0+3)*0.5 = (x(0)+x(3))*0.5$$

For the second step, each of the 13 samples x[0 --- 12] in each of grids Mc[0 --- 3] is inserted in respective positions e[0 --- 39] in each of the grids Mc as the following equation.

$$e[k] = x[Mc+3*k] ; k = 0 \text{ --- } 11,$$

According to this, the 13 samples are placed in each ofthe grids Mc[0 -- 3] as shown in Figs. 4A to 4D.

For the third step, the averages f(k) calculated in the first step are placed in the empty spaces between the 13 samples placed in the grids Mc[0 -- 3]. In this instance, a position for inserting an average f(k) is calculated by the following equation, inserting the same two averages between two adjacent samples.

$$e[k] = x[Mc+3*k] \; ; \; k = 0 \; \text{---} \; 11$$

$$\{$$

$$e[i] = f[k] \; ; \; i = (Mc+1) \; \text{---} \; (Mc+2)$$

$$\}$$

For example, when the grid number Mc is '0', the empty space between samples x[0] and x[3] are inserted of the average "f(0) = (x[0]+x[3]*0.5" for two times. That is, there are two inserting positions between samples x[0] and x[3]. With the aforementioned steps, each of the grids is filled with the 13 speech samples and averages of the samples. However, every grid Mc[0 -- 3] is filled of only its 37 inserting positions. Therefore, for the fourth step, remaining spaces are filled by carrying out the following equation.

```
e[37 --- 39] = f[11]; Mc = 0
e[0] f[0]          ; Mc = 1
e[38, 39] = f[11]
e[0 --- 1] = f[0]       ; Mc = 2
e[39] = f[11]
e[0 -- 2] = f[0]       ; Mc = 3
```

For example, the spaces e[37 -- 39] not filled shown in Fig. 4A are filled with the average f[11]. The f[0 --- 11] are averaged optimal samples, and e[0 --- 39] are synthesized residuals not taking pitches and gain parameters into account. In other words, the RPE grid positioning block 140 receives the 13 speech samples in each grid Mc[0 -- 3] from the inverse APCM 130 and conducts the aforementioned steps to restore each of the 40 speech samples and feed back to the grid selection portion 110. Thus, as a bit rate of a full rate codec applicable to the GSM is 13 Kbps the same as the presently used one, there is almost no loss of speech data. Therefore, if the same algorithm is also applied to the decoder, the present invention can decode an optimal speech signal from a coded speech data.

As has been explained, since only optimal speech samples can be restored without an additional increase of any bit rate, the method for restoring a speech data in a speech codec of the present invention has an advantage of allowing decoding of optimal speech signals.

And, the present invention has an advantage in that an optimum quality speech synthesis data can be obtained without loss of any speech data in restoration of a quantized speech sampling data into an original sample data.

Because the vocoding algorithm can be applicable to a codec with decoder and encoder of the present invention, and because it is foreseeable that modifications to the speech sample data fed back to the RPE grid selection portion can be made possible, it is apparent to those skilled in the art that various modifications and variations can be made in the method for restoring a speech data in a speech codec of the present invention without departing from the spirit or scope of the invention. Thus, it is intended that the present invention cover the modifications and variations of this invention provided they come within the scope of the appended claims and their equivalents.

**Claims**

1.  A speech codec comprising:

    a RPE grid selection portion for making a down sampling N speech samples into subframe units and selecting as optimal grids;
    an APCM quantizer for receiving the N speech samples from the RPE grid selection portion and quantizing the N speech samples using a look up table;
    an inverse APCM portion for decoding data from the APCM quantizer into M speech samples using the look up table; and,
    a grid positioning block for decimating, and restoring the decoded M speech samples into N speech samples.

2. A method for restoring a speech data in a speech codec, comprising the steps of:

   calculating N speech samples into averaged optimal samples f(k);
   inserting M grid samples provided by a look up table into the N samples;
   filling spaces existing between adjacent samples with the optimal samples f(k);
   filling remained spaces using e(k) for samples not expressed by the sample f(k).

3. A method for restoring a speech data in a speech codec, the speech codec for compressing a number of digitized speech data into an arbitrary number of sample data and transmitting the same, the method comprising the steps of:

   (a) calculating averages between adjacent samples for an arbitrary number of speech samples;
   (b) placing the arbitrary number of speech samples at fixed intervals on a grid;
   (c) inserting the averaged speech samples in empty spaces between the arbitrary number of speech samples; and,

   inserting the most approximate averaged speech samples in spaces remained after the placement of the averaged speech samples.

4. A method as claimed in claim 3, wherein, in the step (c), the averaged value is inserted with an averaged value calculated by the following equation;

$$e[k] = x[Mc+3*k] \ ; \ k = 0 \text{ --- } 11$$

$$\{$$

$$e[i] = f[k] \ ; \ i = (Mc+1) \text{ --- } (Mc+2)$$

$$\}$$

where Mc is a grid number, f[k] is an average, e[k] is an inserting position in a corresponding grid.

5. A method as claimed in claim 3, wherein the step (d) is carried out according to the following average calculating equation;

   e[37 --- 39] = f[11] ; Mc = 0
   e[0] f[0]          ; Mc = 1
   e[38, 39] = f[11]
   e[0 --- 1] = f[0]     ; Mc = 2
   e[39] = f[11]
   e[0 -- 2] = f[0]      ; Mc = 3

   where, Mc is a grid number, e[k] is an inserting position in a corresponding grid.

# FIG.1
## background art

## FIG.2A

## FIG.2B

FIG.3A

Original selected 13
speech samples

0 1 2 3 4 5 6 7 8 9 11 12

FIG.3 B

0  3  6  9  12  15  18  21  24  27  30  33  36  39

Intermediate 40
speech samples

FIG.3 C

0  3  6  9  12  15  18  21  24  27  30  33  36  39

Resulting 40 enhanced
speech samples

EP 0 851 407 A2

FIG.4A

| | | | | | | | | | | | | | Mc=0
0  3  6  9  12 15 18 21 24 27 30 33 36

FIG.4B

| | | | | | | | | | | | | | Mc=1
(0)1  4  7  10 13 16 19 22 25 28 31 34 37

FIG.4C

| | | | | | | | | | | | | | Mc=2
(0) 2  5  8  11 14 17 20 23 26 29 32 25 38

FIG.4D

| | | | | | | | | | | | | | Mc=3
(0) 3  6  9  12 15 18 21 24 27 30 33 36 39